# EUROPÄISCHE PATENTSCHRIFT

(11) **EP 2 394 730 B1**
(45) Veröffentlichungstag und Bekanntmachung des Hinweises auf die Patenterteilung: **09.08.2017**
(21) Anmeldenummer: 11167587.2
(22) Anmeldetag: 26.05.2011
(51) Int. Cl.: B01D 53/26, F26B 21/08, A47L 15/48

(54) **Verfahren zum Trocknen eines Gutes und Hausgerät mit einer Adsorptionseinrichtung**
Method for drying an item and household device with an absorption device
Procédé de séchage d'un bien et appareil ménager doté d'un dispositif d'adsorption

(30) Priorität: 09.06.2010 DE 102010029888
(43) Veröffentlichungstag der Anmeldung: 14.12.2011
(73) Patentinhaber: BSH Hausgeräte GmbH, 81739 München (DE)
(72) Erfinder: Stolze, Andreas, 14612 Falkensee (DE)

(56) Entgegenhaltungen:
- EP-A1- 0 777 998
- EP-A1- 2 305 876
- DE-A1- 3 626 887
- DE-A1-102008 032 228

## Beschreibung

Die Erfindung bezieht sich auf ein Verfahren zum Trocknen eines Gutes, das in Kontakt mit zu einem in einer einzigen Adsorptionsmittel-Einheit vorliegenden Adsorptionsmittel strömender Prozessluft gebracht wird, wobei das Adsorptionsmittel während wenigstens einer Adsorptionsphase aus dem Gut verdampfende Feuchtigkeit aus der Prozessluft aufnimmt und in einer nachfolgenden regenerierenden Betriebsphase unter Abgabe von aus der Prozessluft zuvor aufgenommener Feuchtigkeit regeneriert wird.

Die Erfindung bezieht sich zudem auf ein Hausgerät mit einer Adsorptionseinrichtung und mit einem Aufnahmeraum zum Trocknen eines in den Aufnahmeraum einbringbaren Gutes, wobei die Adsorptionseinrichtung eine einzige Adsorptionsmittel-Einheit, wenigstens eine Heizung und wenigstens einen Wärmetauscher mit einer Kondensationsfläche umfasst, wobei zumindest die Adsorptionsmittel-Einheit und die Kondensationsfläche in einem gegen den Aufnahmeraum zu öffnenden und abdichtbaren Gehäuse angeordnet sind und wobei in dem Aufnahmeraum vorhandene Prozessluft bei geöffnetem Gehäuse mit der Adsorptionsmittel-Einheit in physischem Kontakt bringbar ist, um in der Prozessluft vorhandene Feuchtigkeit an der Adsorptionsmittel-Einheit zu adsorbieren, und wobei in dem Aufnahmeraum vorhandene Prozessluft bei gegen den Aufnahmeraum abgedichtetem Gehäuse in thermischen Kontakt mit der von dem Wärmetauscher umfassten Kondensationsfläche bringbar ist, um mittels der Kondensationsfläche gewonnene Wärme aufzunehmen.

Ein gattungsgemäßes Verfahren und ein gattungsgemäßes Hausgerät gehen aus der Offenlegungsschrift DE 10 2008 032 228 A1 hervor, die einen Haushaltswäschetrockner mit einer Adsorptionseinrichtung und einem Aufnahmeraum für zu trocknende Wäsche offenbart. Die Adsorptionseinrichtung umfasst zwei gegen den Aufnahmeraum abdichtbare Kartuschen. In jeder der beiden Kartuschen ist eine Adsorptionsmittel-Einheit mit integrierter Heizung angeordnet. Die Kartuschen verfügen über jeweils einen eigenen Wärmetauscher, wobei die Kondensationsfläche sich im Inneren der Kartusche befindet. Während der kontinuierlichen Trocknung der Wäsche werden die beiden Kartuschen zeitlich versetzt regeneriert. Hierzu wird die Kartusche mit der zu regenerierenden Adsorptionsmittel-Einheit zum Aufnahmeraum hin abgedichtet und beheizt, wobei der desorbierte Dampf an der Kondensationsfläche kondensiert. Zur Energierückgewinnung wird der die Kondensationsfläche umfassende Wärmetauscher durch die Prozessluft gekühlt. Die hierdurch erwärmte Prozessluft wird anschließend in der anderen Kartusche entfeuchtet und als trockener Luftstrom weiter in den Aufnahmeraum geleitet.

Die Offenlegungsschrift DE 10 2008 032 228 A1 offenbart somit auch ein Verfahren zum Trocknen von Wäsche unter Verwendung eines Adsorptionsmittels, wobei das Adsorptionsmittel während der Trocknung der Wäsche alle 5 bis 10 Minuten in einer Adsorptionsphase Feuchtigkeit aufnimmt und in einer nachfolgenden regenerierenden Betriebsphase, also während der Trocknung, regeneriert wird.

Zwar können bei dem bekannten Verfahren bzw. Hausgerät die beiden Adsorptionsmittel-Einheiten relativ klein dimensioniert werden im Vergleich zu der Adsorptionsmittelmenge, welche die gesamte Feuchtigkeit der Wäsche in einer Adsorptionsphase aufnehmen könnte und erst nach erfolgter Trocknung der Wäsche regeneriert werden würde. Die doppelte Ausführung der Kartuschen, der Heizungen und der Wärmetauscher stellt allerdings einen großen apparativen Aufwand dar. Die EP-A-077998 offenbart einen Wäschetrockner mit einer einzigen Adsorptionsmittel-Einheit, wobei während der Regenerierung des Adsorptionsmittels die Trocknung des Guts nicht unterbrochen wird. Vor diesem Hintergrund ist es eine Aufgabe der vorliegenden Erfindung, ein Verfahren der eingangs genannten Art anzugeben, welches eine kontinuierliche, energiesparende und schnelle Trocknung bei geringem apparativem Aufwand ermöglicht und auch unter Verwendung einer geringen Adsorptionsmittelmenge durchführbar ist.

Diese Aufgabe wird erfindungsgemäß bei einem Verfahren der eingangs genannten Art dadurch gelöst, dass während der regenerierenden Betriebsphase aus dem Gut verdampfende Feuchtigkeit adsorptionsmittellos zwischengespeichert wird, indem diese Feuchtigkeit von der für diesen Zweck erwärmten Prozessluft aufgenommen wird, und während der regenerierenden Betriebsphase das Adsorptionsmittel erhitzt wird und der desorbierte Dampf an wenigstens einer Kondensationsfläche kondensiert, wobei die Kondensationswärme zumindest teilweise der Prozessluft zugeführt wird.

Während der Trocknung des Gutes wird erfindungsgemäß die aus dem Gut verdampfende Feuchtigkeit abwechselnd von dem Adsorptionsmittel und der das Gut umgebenden Prozessluft aufgenommen. Das Gut wird somit kontinuierlich getrocknet. Mit der das Gut umgebenen Prozessluft sei im Rahmen dieser Erfindung nicht nur die unmittelbar das Gut umgebende Luftschicht bezeichnet, sondern allgemein die in einem das Gut umgebenden Aufnahmeraum vorhandene Prozessluft, unabhängig davon, ob diese während der regenerierenden Betriebsphase in einem den Aufnahmeraum durchdringenden - also den Aufnahmeraum als Teil des Kreislaufs einschließenden - Kreislauf geführt wird oder lediglich innerhalb des Aufnahmeraumes verbleibt und beispielsweise in diesem umgewälzt wird.

Erfindungsgemäß wird während der Adsorptionsphase die aus dem Gut verdampfende Feuchtigkeit von dem Absorptionsmittel aufgenommen, wobei in dieser Zeitspanne die Prozessluft lediglich als Transportmittel und nicht als längerfristiger Zwischenspeicher für die Feuchtigkeit fungiert, indem die Prozessluft die aus dem Gut verdampfende Feuchtigkeit aufnimmt und zu dem Adsorptionsmittel transportiert. Die Feuchtigkeit wird an dem Adsorptionsmittel adsorbiert und die hierdurch getrocknete Prozessluft kann zur erneuten Aufnahme von Feuchtigkeit dem zu trocknenden Gut wieder zugeführt werden.

In der regenerierenden Betriebsphase wird das Adsorptionsmittel regeneriert und die aus dem Gut verdampfende Feuchtigkeit von der Prozessluft aufgenommen und in dieser zwischengespeichert, bis die regenerative Betriebsphase beendet und die nächste Adsorptionsphase begonnen ist. Das Adsorptionsmittel wird somit zumindest einmal während der Trocknung regeneriert. Beispielsweise kann das Adsorptionsmittel während der Trocknung des Gutes alle 5 bis 10 Minuten regeneriert werden. Es muss sich hierbei nicht um einen zeitlich konstanten Zyklus handeln. Der Start der regenerierenden Betriebsphase kann beispielsweise von dem Beladungszustand (Sättigungsgrad) des Adsorptionsmittels abhängig gemacht werden. Die Prozessluft wird in dieser Phase nicht wie im Stand der Technik nach der Offenlegungsschrift DE 10 2008 032 228 A1 durch ein parallel zu dem Adsorptionsmittel arbeitenden weiteren Adsorptionsmittel entfeuchtet, sondern sie dient über mehrere Minuten als Zwischenspeicher für die aus dem Gut verdampfende Feuchtigkeit, wobei die Aufnahmefähigkeit der Prozessluft durch Erwärmung erhöht ist.

Dass somit während der regenerierenden Betriebsphase aus dem Gut verdampfende Feuchtigkeit adsorptionsmittellos zwischengespeichert ist, bedeutet insbesondere, dass die aus dem Gut verdampfende Feuchtigkeit während der regenerierenden Betriebsphase in der Prozessluft zwischengespeichert ohne während dieser Betriebsphase durch ein Adsorptionsmittel der Prozessluft wieder entzogen zu werden. Dies schließt nicht aus, dass während der regenerierende Betriebsphase der Prozessluft Feuchtigkeit anderweitig beispielsweise durch Kondensationsprozesse entzogen wird. Die in der Prozessluft (noch) zwischengespeicherte Feuchtigkeit wird also erst nach dem Ende der regenerierenden Betriebsphase im Laufe der nachfolgenden Adsorptionsphase wieder mittels des regenerierten Adsorptionsmittels der Prozessluft entzogen.

Das Erwärmen der Prozessluft in der regenerierenden Betriebsphase kann zumindest teilweise beispielsweise durch eine Infrarotlicht-Quelle erfolgen. Gemäß einer besonders energiesparenden Ausführung der Erfindung handelt es sich bei der zur Erwärmung dienenden Wärmeenergie um Verlust- bzw. Abwärme aus der Adsorptionsmittel-Regenerierung.

Die Erfindung sieht vor, dass während der regenerierenden Betriebsphase das Adsorptionsmittel erhitzt wird und der desorbierte Dampf an wenigstens einer Kondensationsfläche kondensiert, wobei die Kondensationswärme zumindest teilweise der Prozessluft zugeführt wird.

Diese Ausbildung der Erfindung ist besonders energiesparend, da die bei der Entsorgung/Rückgewinnung der desorbierten Substanz ohnehin anfallende Kondensationswärme für die notwendige Erwärmung der Prozessluft eingesetzt wird. Die Wärmeenergie der Kondensationsfläche geht dabei ohne einen Übertrag von Dampf auf die Prozessluft über, beispielsweise indem die Prozessluft durch einen die Kondensationsfläche umfassenden Wärmetauscher geleitet wird.

Bei dem zu trocknenden Gut kann es sich um mit Wasser getränkte oder wasserfeuchte Wäsche handeln. Das erfindungsgemäße Verfahren ist aber nicht auf die Trocknung von mit Wasser befeuchtetem/getränktem Gut beschränkt. Demgemäß kann unter dem Begriff Feuchtigkeit auch jede andere verdampfende Flüssigkeit verstanden werden. Das Adsorptionsmittel ist entsprechend der zu adsorbierenden Substanz zu wählen. Im Fall von Wasserdampf kann es sich bei dem Adsorptionsmittel beispielsweise um Zeolith handeln. Zeolith ist hierbei ein Oberbegriff für eine Gruppe von Aluminium-Silikat Verbindungen komplexer Zusammensetzung, die die Fähigkeit aufweisen, Wasser in größeren Mengen unter Freigabe von Wärme zu adsorbieren. Zur Regeneration des Zeolithen wird dieser beispielsweise erhitzt, wobei der aus dem Zeolithen ausgetriebene desorbierte Dampf an geeigneten Kondensationsflächen kondensiert und aufgefangen werden kann. Das erfindungsgemäße Verfahren ermöglicht die Verwendung einer geringen Adsorptionsmittelmenge zur Trocknung des Gutes, denn abhängig von der gewählten Ausgangs- und Endbeladung (Sättigungsgrad) des verwendeten Adsorptionsmittels kann bei Durchführung des erfindungsgemäßen Verfahrens die Anzahl der Zyklen von Adsorptionsphase und regenerierender Betriebsphase beliebig erhöht und damit der gewählten Adsorptionsmittelmenge angepasst werden. Das erfindungsgemäße Verfahren lässt sich aber auch bei Verwendung von größeren Adsorptionsmittelmengen vorteilhaft einsetzen, beispielsweise wenn die Trocknung im Bereich eines besonders effektiven Beladungsintervalls des Adsorptionsmittels durchgeführt werden soll. Da erfindungsgemäß während der Regeneration des Adsorptionsmittels keine Entfeuchtung der Prozessluft durch eine weitere Adsorptionsmittel-Einheit erforderlich ist (wie im eingangs genannten Stand der Technik), sondern zur kontinuierlichen Trocknung des Gutes in dieser Phase lediglich die Prozessluft erwärmt wird, kann eine weitere Adsorptionsmittel-Einheit entfallen. Die Erwärmung der Prozessluft ist mit wesentlich weniger apparativem Aufwand realisierbar. Die Erfindung ermöglicht damit eine kontinuierliche und schnelle Trocknung bei vergleichsweise geringem Adsorptionsmittelbedarf und damit vorteilhafterweise auch geringem Raumbedarf.

Vorteilhafte Ausgestaltungen der Erfindung sind in der nachfolgenden Beschreibung und den abhängigen Patentansprüchen angegeben, deren Merkmale einzeln und in beliebiger Kombination miteinander angewendet werden können. Ebenso entsprechen im Rahmen des technisch Möglichen und Sinnvollen bevorzugten Ausgestaltungen des Verfahrens bevorzugte Ausgestaltungen des Hausgeräts und umgekehrt, und dies auch dann, wenn darauf hierin nicht explizit hingewiesen ist.

Es kann auch als vorteilhaft angesehen werden, dass die Prozessluft in einem Kreislauf geführt wird, wobei der Kreislauf während der Adsorptionsphase zumindest über das Gut und das Adsorptionsmittel führt, wobei das Adsorptionsmittel Feuchtigkeit aus der Prozessluft adsorbiert, und der Kreislauf während der regenerierenden Betriebsphase unter Umgehung des Absorptionsmittels zumindest entlang wenigstens einer Wärmequelle und über das Gut führt.

Durch den bewegten Prozessluftstrom und das aktive Führen der Prozessluft kann das Gut wesentlich schneller getrocknet werden.

Das Adsorptionsmittel kann durch heiße Luft erhitzt werden, welche auf dieses auftrifft.

Gemäß einem weiteren Ausführungsbeispiel kann das Adsorptionsmittel durch direkten Kontakt mit einer Heizeinrichtung erhitzt werden. Das Erhöhen der Temperatur des Adsorptionsmittels ist eine mit wenig apparativem Aufwand realisierbare Art und Weise, die in dem Mittel adsorbierte Substanz aus diesem auszutreiben.

Eine weitere bevorzugte Ausbildung der Erfindung sieht vor, dass nach Beendigung der Trocknung das Adsorptionsmittel regeneriert und hierbei die Kondensationsfläche durch einen externen Luftstroms gekühlt wird und dass in einem weiteren Verfahrensschritt das Adsorptionsmittel bis zu einem erneuten Gebrauch luftdicht verschlossen wird.

Dies hat den Vorteil, dass ein neuer Trocknungsprozess unmittelbar mit der Adsorptionsphase starten kann. Bei der Adsorption der Feuchtigkeit entsteht Wärme in dem Adsorptionsmittel, welche von der Prozessluft aufgenommen wird, so dass sich deren Temperatur erhöht und die Trocknung beschleunigt wird. Zudem kann die Kühlung der Kondensationsfläche durch einen externen Luftstrom bedarfsweise auch während der regenerierenden Betriebsphase zusätzlich zu dem Prozessluftstrom eingesetzt werden, beispielsweise wenn eine zu starke Erwärmung des Gutes während dieser Phase vermieden werden soll.

Vorteilhafter Weise kann weiter vorgesehen sein, dass zur Automatisierung der aufeinander folgenden Phasen der Feuchtigkeits-Sättigungsgrad des Adsorptionsmittels überwacht wird. Diese Ausgestaltung der Erfindung ermöglicht eine Optimierung der Trocknungszeiten, da Beladungszustände des Adsorptionsmittels mit uneffektivem Adsorptionsverhalten vermieden werden können.

Eine weitere Aufgabe der Erfindung ist es, ein Hausgerät der eingangs genannten Art mit einem besonders einfachen Aufbau anzugeben, welches eine kontinuierliche, energiesparende und schnelle Trocknung ermöglicht und dennoch mit einer geringen Adsorptionsmittelmenge betrieben werden kann.

Diese Aufgabe wird erfindungsgemäß bei einem Hausgerät der eingangs genannten Art dadurch gelöst, dass die Adsorptionsmittel-Einheit periodisch während der Trocknung des Gutes regenerierbar ist, indem das Gehäuse während einer regenerierenden Betriebsphase gegen den Aufnahmeraum abgedichtet ist und in dieser Phase aus dem Gut verdampfende Feuchtigkeit von der für diesen Zweck erwärmten Prozessluft bis zum Beginn einer Adsorptionsphase adsorptionsmittellos zwischengespeichert ist, wobei während der regenerierenden Betriebsphase das Adsorptionsmittel erhitzt wird und der desorbierte Dampf an wenigstens einer Kondensationsfläche kondensiert, wobei die Kondensationswärme zumindest teilweise der Prozessluft zugeführt wird.

Das erfindungsgemäße Hausgerät eignet sich zur Durchführung des Verfahrens nach wenigstens einem der Ansprüche 1 bis 4. Der Aufbau des Hausgerätes ist besonders einfach, da gegenüber dem eingangs genannten Stand der Technik nicht mehrere, phasenverschoben arbeitende Adsorptionsmittel-Einheiten erforderlich sind. Zudem kann das erfindungsgemäße Hausgerät mit einer gering dimensionierten Adsorptionsmittel-Einheit betrieben werden, da eine periodische Regeneration der Adsorptionsmittel-Einheit währen der Trocknung ermöglicht ist. Während der Regeneration der Adsorptionsmittel-Einheit ist das die Adsorptionsmittel-Einheit umgebende Gehäuse gegen den Aufnahmeraum abgedichtet und die Temperatur der Adsorptionsmittel-Einheit derart erhöht, dass die adsorbierte Substanz aus der Adsorptionsmittel-Einheit desorbiert und an der Kondensationsfläche kondensieren kann. Das Kondensat kann in einem geeignet angeordneten Sammelbehältnis aufgefangen werden, so dass es von dem Adsorptionsmittel räumlich getrennt ist, so dass das gesammelte Kondensat nach erfolgter Regeneration des Adsorptionsmittels nicht wieder in nennenswertem Umfang von diesem adsorbiert werden kann, beispielsweise indem das Sammelbehältnis gegen das Gehäuseinnere verschlossen wird. Die durch bei der Kondensation freiwerdende Wärmeenergie kann energiesparend zur Erhöhung der Prozessluft-Temperatur verwendet werden, indem in dem Aufnahmeraum vorhandene Prozessluft in thermischen Kontakt mit der Kondensationsfläche des Wärmetauschers gelangt. Hierdurch erhöht sich das Feuchtigkeits-Aufnahmevermögen der Prozessluft, so dass diese während der Regeneration des Adsorptionsmittels besonders effektiv als Zwischenspeicher für die aus dem Gut verdampfende Substanz fungiert. Dass die Prozessluft mittels Wärmetauscher in thermischen Kontakt mit der Kondensationsfläche gebracht wird, kann beispielsweise bedeuten, dass die Prozessluft den Wärmetauscher durchströmt oder entlang des Wärmetauschers streicht, beispielsweise als ein durch ein Gebläse in Bewegung versetzter Luftstrom, welcher z.B. durch einen in dem Wärmespeicher verlaufenden Kühlungskanal strömt.

Die Adsorptionsmittel-Einheit soll im Rahmen dieser Erfindung dann als Einheit verstanden werden, wenn die Einheit im Wesentlichen zusammen regeneriert wird und es sich nicht um eine Zusammenfassung von abwechselnd oder phasenversetzt einsetzbaren Adsorptionsmittel-Untereinheiten handelt. Gemäß einem Ausführungsbeispiel kann es sich bei der Adsorptionsmittel-Einheit um ein Granulat handeln, welches beispielsweise in räumlich separierten Untereinheiten angeordnet ist. Dabei muss die Adsorptionsmittel-Einheit nicht zwingend einen räumlich zusammenhängenden Formkörper aus Adsorptionsmittel bilden, welcher um Heizstäbe herum angeordnet ist. Anzustreben ist hierbei nur, dass das Adsorptionsmittel gegenüber der zu entfeuchtenden Prozessluft eine große Oberfläche aufweist und zur schnellen Desorption ein effektiver Wärmeübergang zwischen der Heizung und dem Adsorptionsmittel gewährleistet ist.

Die wenigstens eine Heizung dient zumindest der Regeneration der Adsorptionsmittel-Einheit. Hierzu kann die Heizung beispielsweise einen auf die Adsorptionsmitteleinheit gerichteten Luftstrom erwärmen oder direkt in die Adsorptionsmittel-Einheit integriert sein.

Das erfindungsgemäße Hausgerät muss nicht ausschließlich eine Trocknungsfunktion aufweisen. Gemäß einem Ausführungsbeispiel kann das erfindungsgemäße Hausgerät ein Waschtrockner sein. Gemäß einem anderen Ausführungsbeispiel ist das Hausgerät ein Geschirrspüler oder Wäschetrockner. Gemäß einem weiteren Ausführungsbeispiel ist das Hausgerät ein Dörrapparat zur Trocknung von Lebensmitteln.

Ein weiterer Vorteil des erfindungsgemäßen Hausgerätes ist es, dass das zu trocknende Gut nicht bewegt werden muss und keinen hohen Temperaturen ausgesetzt ist. Eine derart schonende Trocknung eignet sich besonders gut für empfindliche Textilien wie Seide oder Wolle.

Zur Erhöhung der Trocknungsgeschwindigkeit sieht eine vorteilhafte Ausgestaltung der Erfindung vor, dass das Hausgerät wenigstens ein Gebläse und Luftleitmittel umfasst, wobei das Gebläse und die Luftleitmittel derart angeordnet sind, dass die Prozessluft in dem Aufnahmeraum bei Betrieb des Gebläses in einer ersten Stellung der Luftleitmittel in einem ersten Kreislauf, der die Adsorptionsmittel-Einheit und das zu trocknende Guts einschließt, geführt ist, so dass aus dem Gut verdampfende und von der Prozessluft aufgenommene Feuchtigkeit von der Adsorptionsmittel-Einheit adsorbierbar ist, und in einer zweiten, das Gehäuse gegen den Aufnahmeraum abdichtenden Stellung der Luftleitmittel in einem zweiten Kreislauf entlang des zu trocknenden Guts und des Wärmetauschers geführt ist.

Es kann auch als vorteilhaft angesehen werden, dass das erfindungsgemäße Hausgerät ein Gebläse umfasst, welches in einem den Wärmetauscher mit der Umgebungsluft des Hausgeräts verbindenden Luftweg angeordnet ist, so dass die Umgebungsluft bei Betrieb des Gebläses und einer geeigneten Stellung der Luftleitmittel entlang des Wärmetauschers führbar ist.

Diese Ausgestaltung der Erfindung eignet sich besonders für eine Regeneration der Adsorptionsmittel-Einheit nach Abschluss der Trocknung, wobei zur Kühlung der Kondensationsfläche Umgebungsluft entlang des Wärmetauschers geführt wird. Die Ausgestaltung der Erfindung kann sich aber auch dazu eignen, die Temperatur der Prozessluft während der Trocknung und laufender Regeneration der Adsorptionsmittel-Einheit zu verringern, um beispielsweise ein Überschreiten einer dem Gut schadenden Prozessluft-Temperatur zu vermeiden.

Eine aufgrund ihres besonders schnellen Aufheizvermögens der Adsorptionsmittel-Einheit bevorzugte Weiterbildung der Erfindung sieht vor, dass die Heizung in die Adsorptionsmittel-Einheit integriert ist.

Es kann auch als vorteilhaft angesehen werden, dass das erfindungsgemäße Hausgerät eine den Beladungszustand der Adsorptionsmittel-Einheit überwachende Sensorik umfasst.

Diese Ausgestaltung der Erfindung ermöglicht eine Optimierung der Trocknungszeiten, da Beladungszustände des Adsorptionsmittels mit uneffektivem Adsorptionsverhalten so vermieden werden können.

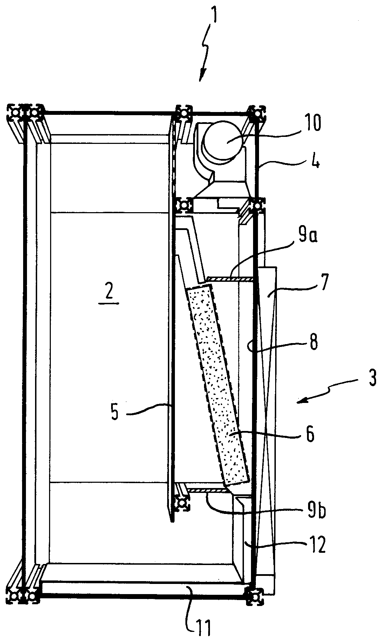

Weitere zweckmäßige und bevorzugte Ausgestaltungen und Vorteile der Erfindung sind Gegenstand der folgenden Beschreibung eines Ausführungsbeispiels der Erfindung unter Bezug auf die Figur der beigefügten Zeichnung, wobei gleiche Bezugszeichen auf gleich wirkende Bauteile verweisen.

Dabei zeigt die Figur ein Hausgerät in schematischer Darstellung in einer Schnittansicht.

Die Figur zeigt ein Ausführungsbeispiel des Hausgerätes 1 in einer Schnittansicht mit einem Aufnahmeraum 2 und einer Adsorptionseinrichtung 3. Die Adsorptionseinrichtung 3 umfasst ein in dem Aufnahmeraum 2 an einer Außenwand 4 des Hausgerätes 1 angeordnetes lang gestrecktes Gehäuse 5, in welchem eine Adsorptionsmittel-Einheit 6 und als Teil eines Wärmetauschers 7 eine Kondensationsfläche 8 angeordnet ist. Der Wärmetauscher 7 erstreckt sich hierbei ausgehend von der Kondensationsfläche 8 plattenförmig zwischen dem Gehäuse 5 und der Außenwand 4 des Hausgerätes 1 und ist parallel zur Außenwand 4 von einem Luftstrom durchströmbar. Hierzu kann der Wärmetauscher 7 beispielsweise von einer Vielzahl an Luftkanälen (nicht dargestellt) durchzogen sein. Das Gehäuse 5 ist durch jeweils eine Klappe 9a und 9b an seinen Stirnseiten gegen den Aufnahmeraum 2 abdichtbar. Vor der Klappe 9a ist ein Gebläse 10 angeordnet. Im Bodenbereich des Hausgerätes 1 befindet sich ein umschlossener Kondensatbehälter 11, welcher über eine Verbindung 12 mit dem Inneren des Gehäuses 5 verbunden ist.

Das Gebläse 10 und Luftleitmittel - z.B. in Form der Klappen 9a und 9b - sind derart angeordnet, dass die Prozessluft bei geöffneten Klappen 9a und 9b und eingeschaltetem Gebläse 10 in einem Kreislauf entlang der Adsorptionsmittel-Einheit 6 und durch den Aufnahmeraum 2 um das zu trocknende Gut herum (nicht dargestellt) geführt wird. Während dieser Adsorptionsphase nimmt die Adsorptionsmittel-Einheit 6 Feuchtigkeit aus der Prozessluft auf, die insoweit zumindest teilweise entfeuchtet durch die Klappe 9b erneut in den Aufnahmeraum 2 eintritt und durch diesen hindurch mit weiterer, dem Gut entzogener Feuchtigkeit beladen wieder das Gebläse 10 passiert und durch die Klappe 9a hindurch erneut auf die Adsorptionsmittel-Einheit 6 trifft.

Wenn nach einiger Zeit ein gewisser Sättigungsrad erreicht bzw. die Kapazität der Adsorptionsmittel-Einheit 6 erschöpft ist, wird zur Regeneration der Adsorptionsmittel-Einheit das Gehäuse 5 durch Schließen der Klappen 9a, 9b - in die in der Figur gezeigte Stellung - gegen den Aufnahmeraum 2 abgedichtet und die Adsorptionsmittel-Einheit regeneriert. Die Adsorptionsmittel-Einheit 6 kann aus einer von einem Netz umgebenen Schüttung aus Granulat eines Zeolithen bestehen, wobei eine Heizung (nicht dargestellt) in die Adsorptionsmittel-Einheit 6 integriert ist.

Zum Regenerieren des Adsorptionsmittels wird in dieser regenerierenden Betriebsphase das Adsorptionsmittel beheizt, so dass das Adsorbens aus dem Adsorptionsmittel desorbiert und das Innere des Gehäuses 5 als Dampf ausfüllt. Der Dampf kondensiert (zumindest) an der Kondensationsfläche 8, wobei das entstehende Kondensat über die Verbindung 12 in dem Kondensatbehältnis 11 aufgefangen wird. In dieser Stellung der Luftleitmittel 9a, 9b wird die Prozessluft bei eingeschaltetem Gebläse 10 in einem Kreislauf durch das Gebläse 10 hindurch und weiter durch den Wärmetauscher 7 und in den Aufnahmeraum 2 hinein und erneut zum Gebläse 10 transportiert. Hierbei nimmt die Prozessluft in dem Wärmetauscher 7 Wärmeenergie und in dem Aufnahmeraum 2 Feuchtigkeit aus dem Gut auf. Bis zur Beendigung der regenerierenden Betriebsphase fungiert die Prozessluft damit als Zwischenspeicher für die aus dem Gut (nicht dargestellt) verdampfende Feuchtigkeit.

Sobald die Adsorptionsmittel-Einheit 6 nur noch eine gewünschte Anfangsbeladung aufweist, kann bei wieder geöffneter, die Passage der Prozessluft durch das Gehäuse 5 wieder freigebender Stellung der Klappen 9a, 9b eine erneute Adsorptionsphase durchgeführt werden. In dieser Phase dient die Prozessluft wieder lediglich als Transportmittel für die aus dem Aufnahmeraum 2 zu entfernende Feuchtigkeit zur Adsorptionsmittel-Einheit 6 hin.

### Bezugszeichenliste

- 1: Hausgerät
- 2: Aufnahmeraum
- 3: Adsorptionseinrichtung
- 4: Außenwand
- 5: Gehäuse
- 6: Adsorptionsmittel-Einheit
- 7: Wärmetauscher
- 8: Kondensationsfläche
- 9a: Klappe
- 9b: Klappe
- 10: Gebläse
- 11: Kondensatbehälter
- 12: Verbindung

## Patentansprüche

1. Verfahren zum Trocknen eines Gutes, das in Kontakt mit zu einem in einer einzigen Adsorptionsmittel-Einheit (6) vorliegenden Adsorptionsmittel strömender Prozessluft gebracht wird,
- wobei das Adsorptionsmittel während wenigstens einer Adsorptionsphase aus dem Gut verdampfende Feuchtigkeit aus der Prozessluft aufnimmt und in einer nachfolgenden regenerierenden Betriebsphase unter Abgabe von aus der Prozessluft zuvor aufgenommener Feuchtigkeit regeneriert wird,
**dadurch gekennzeichnet, dass**
- während der regenerierenden Betriebsphase aus dem Gut verdampfende Feuchtigkeit adsorptionsmittellos zwischengespeichert wird, indem diese Feuchtigkeit von der für diesen Zweck erwärmten Prozessluft aufgenommen wird, und
- während der regenerierenden Betriebsphase das Adsorptionsmittel erhitzt wird und der desorbierte Dampf an wenigstens einer Kondensationsfläche (8) kondensiert, wobei die Kondensationswärme zumindest teilweise der Prozessluft zugeführt wird.

2. Verfahren nach Anspruch 1,
**dadurch gekennzeichnet, dass**
- die Prozessluft während der Adsorptionsphase zumindest über das Gut und das Adsorptionsmittel geführt wird, wobei das Adsorptionsmittel Feuchtigkeit aus der Prozessluft adsorbiert, und während der regenerierenden Betriebsphase unter Umgehung des Absorptionsmittels zumindest zu wenigstens einer Wärmequelle (7) und zu dem Gut geführt wird.

3. Verfahren nach wenigstens einem der vorangehenden Ansprüche,
**dadurch gekennzeichnet, dass**
- nach Beendigung der Trocknung das Adsorptionsmittel regeneriert und hierbei die Kondensationsfläche (8) durch einen externen Luftstrom gekühlt wird und
- das Adsorptionsmittel anschließend bis zu seiner erneuten Verwendung luftdicht verschlossen wird.

4. Verfahren nach wenigstens einem der vorangehenden Ansprüche,
**dadurch gekennzeichnet, dass**
- zur automatisierten Bemessung der Adsorptionsphase und der regenerierenden Betriebsphase der Feuchtigkeits-Sättigungsgrad des Adsorptionsmittels überwacht wird.

5. Hausgerät mit einer Adsorptionseinrichtung (3) und mit einem Aufnahmeraum (2) zum Trocknen eines in den Aufnahmeraum (2) einbringbaren Gutes,
- wobei die Adsorptionseinrichtung (3) eine einzige Adsorptionsmittel-Einheit (6), wenigstens eine Heizung und wenigstens einen Wärmetauscher (7) mit einer Kondensationsfläche (8) umfasst,
- wobei zumindest die Adsorptionsmittel-Einheit (6) und die Kondensationsfläche (8) in einem gegen den Aufnahmeraum (2) zu öffnenden und abdichtbaren Gehäuse (5) angeordnet sind und
- wobei in dem Aufnahmeraum (2) vorhandene Prozessluft bei geöffnetem Gehäuse (5) mit der Adsorptionsmittel-Einheit (6) in physischen Kontakt bringbar ist, um in der Prozessluft vorhandene Feuchtigkeit an der Adsorptionsmittel-Einheit (6) zu adsorbieren, und
- wobei in dem Aufnahmeraum (2) vorhandene Prozessluft bei gegen den Aufnahmeraum (2) abgedichtetem Gehäuse (5) mit dem Wärmetauscher (7) in thermischen Kontakt bringbar ist, um mittels der Kondensationsfläche (8) gewonnene Wärme aufzunehmen ,
**dadurch gekennzeichnet, dass**
- die Adsorptionsmittel-Einheit (6) periodisch während der Trocknung des Gutes regenerierbar ist, indem das Gehäuse (5) während einer regenerierenden Betriebsphase gegen den Aufnahmeraum (2) abgedichtet ist und in dieser Phase aus dem Gut verdampfende Feuchtigkeit von der für diesen Zweck erwärmten Prozessluft bis zum Beginn einer Adsorptionsphase adsorptionsmittellos zwischengespeichert ist, wobei das Hausgerät derart gestaltet ist, dass
- während der regenerierenden Betriebsphase das Adsorptionsmittel erhitzt wird und der desorbierte Dampf an der Kondensationsfläche (8) kondensiert, wobei die Kondensationswärme zumindest teilweise der Prozessluft zugeführt wird.

6. Hausgerät nach Anspruch 5,
**gekennzeichnet durch**
- wenigstens ein Gebläse (10) und Luftleitmittel (9a, 9b),
- wobei das Gebläse (10) und die Luftleitmittel (9a, 9b) derart angeordnet sind, dass die Prozessluft in dem Aufnahmeraum (2) bei Betrieb des Gebläses (10) in einer ersten Stellung der Luftleitmittel (9a, 9b) in einem Kreislauf, der die Adsorptionsmittel-Einheit (6) und das zu trocknende Gut einschließt, geführt ist, so dass aus dem Gut verdampfende und von der Prozessluft aufgenommene Feuchtigkeit von der Adsorptionsmittel-Einheit adsorbierbar ist, und in einer zweiten, das Gehäuse (5) gegen den Aufnahmeraum (2) abdichtenden Stellung der Luftleitmittel (9a, 9b) in einem Kreislauf entlang des zu trocknenden Guts und des Wärmetauschers (7) geführt ist.

7. Hausgerät nach Anspruch 6,
**dadurch gekennzeichnet, dass**
- ein Gebläse (10) in einem den Wärmetauscher (7) mit der Umgebungsluft des Hausgerätes (1) verbindenden Luftweg angeordnet ist, so dass die Umgebungsluft bei Betrieb des Gebläses (10) durch Stellung der Luftleitmittel (9a, 9b) entlang des Wärmetauschers (7) führbar ist.

8. Hausgerät nach wenigstens einem der Ansprüche 5 bis 7,
**dadurch gekennzeichnet, dass**
- die Heizung in die Adsorptionsmittel-Einheit (6) integriert ist.

9. Hausgerät nach wenigstens einem der Ansprüche 5 bis 8,
**dadurch gekennzeichnet, dass**
- das Hausgerät (1) eine den Feuchtigkeits-Sättigungsgrad der Adsorptionsmittel-Einheit (6) überwachende Sensorik umfasst.

## Claims

1. Method for drying an item which is brought into contact with process air flowing to an adsorbent present in a single adsorbent unit (6),
- wherein the adsorbent adsorbs moisture from the process air evaporating from the item during at least one adsorption phase, and is regenerated in a subsequent regenerative operating phase, with the release of moisture previously adsorbed from the process air,
**characterised in that**
- moisture evaporating from the item is temporarily stored free from adsorbent during the regenerative operating phase, by this moisture being adsorbed by the process air heated for this purpose, and
- during the regenerative operating phase the adsorbent is heated and the desorbed vapour condenses on at least one condensation surface (8), wherein the condensation heat is supplied at least partly to the process air.

2. Method according to claim 1,
**characterised in that**
- the process air is conducted at least over the item and the adsorbent during the adsorption phase, wherein the adsorbent adsorbs moisture from the process air, and during the regenerative operating phase is conducted, bypassing the adsorbent, at least to at least one heat source (7) and to the item.

3. Method according to at least one of the preceding claims,
**characterised in that**
- after completion of the drying, the adsorbent is regenerated and in so doing the condensation surface (8) is cooled by an external air flow and
- the adsorbent is then sealed airtight until it is reused.

4. Method according to at least one of the preceding claims,
**characterised in that**
- the moisture saturation level of the adsorbent is monitored for the automated measurement of the adsorption phase and of the regenerative operating phase.

5. Household device having an adsorption apparatus (3) and having a receiving space (2) for drying an item that can be introduced into the receiving space (2),
- wherein the adsorption device (3) comprises a single adsorbent unit (6), at least one heater and at least one heat exchanger (7) with a condensation surface (8),
- wherein at least the adsorbent unit (6) and the condensation surface (8) are arranged in a housing (5) that can be opened and sealed in respect of the receiving space (2) and
- wherein process air present in the receiving space (2) can be brought into physical contact with the adsorbent unit (6) when the housing (5) is open, in order to adsorb any moisture present in the process air at the adsorbent unit (6), and
- wherein process air present in the receiving space (2) can be brought into thermal contact with the heat exchanger (7) when the housing (5) is sealed in respect of the receiving space (2), in order to adsorb heat gained by means of the condensation surface (8),
**characterised in that**
- the adsorption unit (6) can be periodically regenerated during the drying of the item, by the housing (5) being sealed in respect of the receiving space (2) during a regenerative operating phase and by moisture evaporating from the item being temporarily stored free from adsorbent in this phase by process air heated for this purpose until the start of an adsorption phase, wherein
the household device is configured such that
- during the regenerative operating phase the adsorbent is heated and the desorbed vapour condenses on the condensation surface (8),
wherein the condensation heat is supplied at least partly to the process air.

6. Household device according to claim 5,
**characterised by**
- at least one fan (10) and air conduction means (9a, 9b),
- wherein the fan (10) and the air conduction means (9a, 9b) are arranged such that the process air in the receiving space (2) is conducted during operation of the fan (10) in a first position of the air conduction means (9a, 9b) in a circuit which includes the adsorbent unit (6) and the item to be dried, such that moisture evaporating from the item and adsorbed by the process air can be adsorbed by the adsorbent unit, and in a second position of the air conduction means (9a, 9b) sealing the housing (5) in respect of the receiving space (2) is conducted in a circuit along the item to be dried and the heat exchanger (7).

7. Household device according to claim 6,
**characterised in that**
- a fan (10) is arranged in an air channel connecting the heat exchanger (7) to the ambient air of the household device (1), such that the ambient air can be conducted along the heat exchanger (7) during operation of the fan (10) by positioning the air conduction means (9a, 9b).

8. Household device according to at least one of claims 5 to 7,
**characterised in that**
- the heater is integrated into the adsorption unit (6).

9. Household device according to at least one of claims 5 to 8,
**characterised in that**
- the household device (1) comprises a sensor system monitoring the level of moisture saturation of the adsorbent unit (6).

## Revendications

1. Procédé de séchage d'un bien placé en contact avec un air de processus s'écoulant vers un adsorbant présent dans une seule unité d'adsorbant (6), dans lequel l'adsorbant adsorbe durant au moins une phase d'adsorption l'humidité s'évaporant du bien au départ de l'air de processus et se régénère durant une phase d'exploitation régénérante suivante en restituant l'humidité préalablement adsorbée au départ de l'air de processus, **caractérisé en ce que** durant la phase d'exploitation régénérante, l'humidité s'évaporant du bien est stockée temporairement sans adsorbant, en prélevant cette humidité au départ de l'air de processus échauffé à cette fin, et durant la phase d'exploitation régénérante, l'adsorbant est échauffé et la vapeur désorbée condense en au moins une surface de condensation (8), dans lequel la chaleur de condensation est au moins partiellement adjointe à l'air de processus.

2. Procédé selon la revendication 1, **caractérisé en ce que** l'air de processus est au moins mené à travers le bien et l'adsorbant durant la phase d'adsorption, dans lequel l'adsorbant adsorbe l'humidité au départ de l'air de processus, et est mené durant la phase d'exploitation régénérante en contournant l'adsorbant au moins vers au moins une source de chaleur (7) et vers le bien.

3. Procédé selon au moins l'une des revendications précédentes, **caractérisé en ce qu'**après l'achèvement du séchage, l'adsorbant est régénéré et la surface de condensation (8) est refroidie par un flux d'air externe et l'adsorbant est ensuite obturé de manière étanche à l'air jusqu'à sa prochaine utilisation.

4. Procédé selon au moins une des revendications précédentes, **caractérisé en ce que** pour le calcul automatisé de la phase d'adsorption et de la phase d'exploitation régénérante, le degré de saturation en humidité de l'adsorbant est surveillé.

5. Appareil ménager avec un dispositif d'adsorption (3) et avec un espace d'accueil (2) pour le séchage d'un bien à insérer dans l'espace d'accueil (2), dans lequel le dispositif d'adsorption (3) englobe une seule unité d'adsorbant (6), au moins un chauffage et au moins un échangeur de chaleur (7) avec une surface de condensation (8),
dans lequel au moins l'unité d'adsorbant (6) et la surface de condensation (8) sont disposées dans un carter (5) pouvant être rendu étanche et à ouvrir contre l'espace d'accueil (2) et dans lequel l'air de processus se trouvant dans l'espace d'accueil (2) peut être placé en contact physique avec l'unité d'adsorbant (6) lorsque le carter (5) est ouvert, afin d'adsorber l'humidité présente dans l'air de processus dans l'unité d'adsorbant (6), et dans lequel l'air de processus présent dans l'espace d'accueil (2) peut être placé en contact thermique avec l'échangeur de chaleur (7) lorsque le carter (5) est rendu étanche contre l'espace d'accueil (2), afin de prélever la chaleur obtenue au moyen de la surface de condensation (8), **caractérisé en ce que** l'unité d'adsorbant (6) est régénérable périodiquement durant le séchage du bien, en rendant le carter (5), durant une phase d'exploitation régénérante, étanche contre l'espace d'accueil (2) et en stockant temporairement durant cette phase l'humidité qui s'évapore du bien au départ de l'air de processus échauffé à cet effet sans adsorbant jusqu'au début d'une phase d'adsorption, dans lequel l'appareil ménager est aménagé de telle sorte que durant la phase d'exploitation régénérante, l'adsorbant est échauffé et la vapeur désorbée condensée sur la surface de condensation (8), la chaleur de condensation étant au moins partiellement adjointe à l'air de processus.

6. Appareil ménager selon la revendication 5, **caractérisé par** au moins un ventilateur (10) et un moyen de guidage de l'air (9a, 9b), dans lequel le ventilateur (10) et le moyen de guidage de l'air (9a, 9b) sont disposés de telle sorte que l'air de processus est mené, dans l'espace d'accueil, (2) lors de l'exploitation du ventilateur (10) en une première position du moyen de guidage de l'air (9a, 9b), dans un circuit qui inclut l'unité d'adsorbant (6) et le bien à sécher, de sorte que l'humidité qui s'évapore du bien et adsorbée au départ de l'air de processus peut être adsorbée par l'unité d'adsorbant, et dans une deuxième position du moyen de guidage de l'air (9a, 9b) rendant le carter étanche (5) contre l'espace d'accueil (2), dans un circuit le long du bien à sécher et de l'échangeur de chaleur (7).

7. Appareil ménager selon la revendication 6, **caractérisé en ce qu'**un ventilateur (10) est disposé dans un passage d'air reliant l'échangeur de chaleur (7) avec l'air environnant de l'appareil ménager (1), de sorte que l'air environnant puisse, lors de l'exploitation du ventilateur (10), via la position du moyen de guidage de l'air (9a, 9b), guider le long de l'échangeur de chaleur (7).

8. Appareil ménager selon au moins une des revendications 5 à 7, **caractérisé en ce que** le chauffage est intégré à l'unité d'adsorbant (6).

9. Appareil ménager selon au moins une des revendications 5 à 8, **caractérisé en ce que** l'appareil ménager (1) englobe une technologie de capteurs qui surveille le degré de saturation en humidité de l'unité d'adsorbant (6).
